Europäisches Patentamt

European Patent Office

Office européen des brevets

(11) Publication number: **0 381 432**
**A2**

# EUROPEAN PATENT APPLICATION

(21) Application number: 90300932.2

(22) Date of filing: 30.01.90

(51) Int. Cl.5: **C08F 212/08, C08F 279/02**

(30) Priority: 30.01.89 US 304047

(43) Date of publication of application:
08.08.90 Bulletin 90/32

(84) Designated Contracting States:
BE DE ES FR GB IT NL

(71) Applicant: **ARCO CHEMICAL TECHNOLOGY INC.**
**3 Christina Centre Suite 902 201 N Walnut Street**
**Wilmington Delaware 19801(US)**

(72) Inventor: **Yang, Lau Shan**
**2604 North Gate Road**
**Wilmington, Delaware 19810(US)**

(74) Representative: **Cropp, John Anthony David et al**
**MATHYS & SQUIRE 10 Fleet Street**
**London, EC4Y 1AY(GB)**

(54) Preparation of large beads of a styrene copolymer.

(57) A process for producing large beads of a copolymer comprised of from about 60 to 99 weight percent of a mono-vinyl aromatic monomer such as styrene and from about 1 to 40 weight percent of an acrylic acid monomer such as methacrylic acid is disclosed. The copolymer beads obtained in high yield by this process are much larger in diameter than those obtained by prior art methods and are directly suitable for use in molding applications since pelletization is not required. The large beads are produced by adding a small amount of a water-soluble polymer such as polyvinyl alcohol to an aqueous polymerization mixture after about 10 to 75% conversion of the monomers has been achieved.

EP 0 381 432 A2

## PREPARATION OF LARGE BEADS OF A STYRENE COPOLYMER

This invention relates to a process for copolymerizing a mono-vinyl aromatic monomer and an acrylic acid monomer to form a moldable thermoplastic resin. More particularly, the invention provides a method for directly obtaining large solid beads of a styrene/methacrylic acid copolymer.

## BACKGROUND OF THE INVENTION

Copolymers of styrene and methacrylic acid are thermoplastics known to possess a number of useful properties, including good dimensional stability due to a low degree of moisture absorbance. Articles molded from such copolymers display good resistance to hot water and are able to withstand steam pasteurization. The heat resistance of the copolymers is much greater than that of polystyrene. Furthermore, the heat distortion temperature may be controlled as desired by varying the methacrylic acid content. Styrene/methacrylic acid copolymers have excellent clarity and high chemical resistance, especially to oil. This desirable combination of properties has enabled the use of styrene/methacrylic acid copolymers in electrical equipment housings, automotive parts, medical equipment, packaging, and optical parts.

A number of different processes for the preparation of styrene/methacrylic acid copolymers have been described in the prior art, including bulk or solution polymerization (as taught in U.S. Pat. Nos. 3,035,033 and 4,275,182, for example).

A type of process which has been found to be particularly well-suited for styrene/methacrylic acid copolymerization is suspension polymerization, in which the monomers initially suspended in water as liquid droplets are converted to small solid copolymer beads. One of the primary advantages of a suspension polymerization is that temperature control is relatively simple due to the ability of the water phase to dissipate the heat of reaction and the low viscosity of the polymer suspension obtained.

U.S. Pat. No. 3,839,308 teaches a suspension polymerization process in which the methacrylic acid is continuously introduced until 50% conversion of the styrene monomer is achieved. According to the teachings of this patent, copolymers substantially homogeneous in character and having high heat distortion temperatures and tensile strengths are obtained.

U.S. Pat. No. 4,631,307 teaches the preparation of rubber-modified styrene/methacrylic acid copolymers using either emulsion polymerization in combination with a coagulation step or bulk polymerization followed by suspension polymerization.

Jpn. Pat. No. 61-252209 teaches a suspension polymerization process in which the methacrylic acid is added during the initial stage of polymerization. The suspension preferably contains an emulsion polymerization inhibitor to reduce the formation of unrecoverable finely powdered copolymer. Higher water/monomer ratios were found to yield products having superior physical properties.

Jpn. Pat. No. 60-248708 teaches suspension polymerization of styrene and methacrylic acid using a free radical initiator. The monomers are partially polymerized in bulk, and then treated with water and partially saponified polyvinyl acetate to create a suspension polymerization system.

Conventional suspension polymerization of styrene and an acrylic acid monomer (acrylic acid or methacrylic acid) yields small beads of copolymer having an average diameter of only up to about 1 mm. More typically, the particle size obtained is between 100 to 500 μm. To be usable in molding applications, the small beads must be pelletized to form larger, substantially round beads greater than 1 mm in diameter. Pelletization eliminates the "dust" problem encountered using the small beads obtained directly from a conventional suspension polymerization process, which contain a high proportion of "fines". The free-flowing pellets are more easily handled and can be readily processed in conventional molding equipment. Thus, it would be highly desirable for practical reasons to form large beads of copolymer during the copolymerization process in order to avoid a subsequent pelletization step.

Although the reactivity ratios of styrene and acrylic acid or methacrylic acid are fairly similar, indicating that random copolymerization is feasible, the suspension copolymerization of these monomers is complicated by the solubility of the acrylic acid monomer in water. Polymerization of the acrylic acid monomer can therefore take place in both the water phase and the suspended organic phase. Since styrene is essentially water insoluble, the acrylic acid monomer/styrene ratio in the final copolymer product obtained may be significantly less than the ratio of monomers charged. The homopolymer of acrylic acid monomer which tends to form in the aqueous phase presents a disposal problem and often results in the generation of foam. In addition, the presence of the carboxylic acid group tends to emulsify the mixture of organic monomers and water, yielding a very fine latex-type copolymer product.

## SUMMARY OF THE INVENTION

The present invention provides a process for producing large solid beads of a copolymer comprising the steps of: (a) forming an aqueous heterogeneous mixture comprised of water, from about 60 to 99 weight percent based on total copolymer of a monovinyl aromatic monomer, and from about 1 to 40 weight percent based on total copolymer of an acrylic acid monomer; (b) reacting the aqueous heterogeneous mixture in the presence of a free radical polymerization initiator to form a copolymer until from about 10 to 75 weight percent of each of the monomers is polymerized; (c) adding a water-soluble polymer in an amount effective to form a plurality of large liquid droplets comprised of the copolymer and the unpolymerized monomers; and (d) completing the polymerization of the monomers whereby the large liquid droplets are converted into large solid beads.

The large solid beads obtained by the process of this invention are directly suitable for use in molding applications and do not require a separate pelletization step prior to molding. The particle size distribution of the beads is very uniform and can be readily controlled by changing the agitation rate and the concentration of water-soluble polymer added to the polymerization mixture. Typically, polymerization conditions are adjusted so that the beads are between about 3 and 6 mm in average diameter, although beads ranging in size from about 1 to 10 mm in diameter can also be produced by the process of this invention.

A further advantage of the process of this invention is that the composition of the copolymer obtained is very close to that of the monomer mixture initially charged, thus permitting precise control of copolymer properties and minimizing loss of the acrylic acid monomer. In a preferred embodiment, a rubbery polymer is incorporated with the copolymer during the process to provide improved impact strength.

Molded articles obtained by molding the large solid beads of copolymer produced by this process exhibit physical properties including heat distortion resistance and low moisture absorbance, at least equivalent to those exhibited by comparable copolymers produced by prior art processes. The present process does not require the use of a water-insoluble inorganic suspending agent, in contrast to certain prior art methods, and thus affords copolymer having excellent clarity. An acid wash step to remove the inorganic suspending agent is not necessary.

## DETAILED DESCRIPTION OF THE INVENTION

The copolymer produced in accordance with the process of this invention is comprised of from about 60 to 99 weight percent based on total copolymer of a mono-vinyl aromatic monomer and from about 1 to 40 weight percent of an acrylic acid monomer. Preferably from about 70 to 90 weight percent of the mono-vinyl aromatic monomer and from 10 to 30 percent of the acrylic acid monomer are present. The glass transition temperature of the copolymer may be readily varied as desired by changing the acrylic acid monomer content. The copolymer is substantially random in structure; that is, it does not contain any "blocks" or segments in which a large number of one type of monomer unit are exclusively present. The number average molecular weight of the copolymer may be from about 10,000 to 1,000,000; most typically, the number average molecular weight is between about 30,000 and 100,000. The molecular weight may be controlled, if desired, by adding one or more of the chain transfer agents well-known in the free radical polymerization art.

The mono-vinyl aromatic monomer may be any ethylenically unsaturated compound containing a benzene ring and capable of being polymerized by free radical means. The mono-vinyl aromatic monomer should be substantially insoluble in water. The most preferred mono-vinyl aromatic monomer is styrene, but other such compounds suitable for use in the process of this invention include p-methyl styrene, m-ethyl styrene, p-tert-butyl styrene, p-chloro styrene, alpha-methyl styrene, and vinyl naphthalene, as well as other alkyl- or halo-substituted styrenes. Mixtures of mono-vinyl aromatic monomers may also be employed. Minor amounts of other ethylenically unsaturated copolymerizable monomers may be used, including unsaturated nitriles such as acrylonitrile.

The acrylic acid monomer may be either acrylic acid or methacrylic acid. Acrylate esters, such as methyl methacrylate, cannot be substituted for all of the acrylic acid or methacrylic acid, although small amounts may be used to form terpolymers. The acrylic acid monomer should be substantially soluble in the mono-vinyl aromatic monomer.

In the first step of the process of this invention, the mono-vinyl aromatic monomer, the acrylic acid monomer, and water are combined in a reactor capable of being stirred, heated, and cooled. The reactor may be of any type generally suitable for use in conventional suspension polymerization. The mixture is heated at a suitable temperature in the presence of a free radical polymerization initiator to begin polymerization. The free radical polymerization initiator may be any of the water-insoluble initiators well known in the suspension polymerization art sSuch as organic peroxides, peresters, perketals and percarbonates. A mixture of free radical polymerization initiators may be advantageously used; mixtures of a low temperature and a high temperature initiator have been found to be particularly effective. Examples of low temperature initiators include organic peroxides such as benzoyl peroxide, caproyl peroxide, lauroyl peroxide, t-butyl peroctoate, cyclohoxanone peroxide, and decanoyl peroxide, as well as other initiators such as azo-bis-isobutyronitrile (AIBN). The high temperature initiators can be, suitably, t-butyl peracetate, t-butylperbenzoate, or t-butyl peroxy isopropyl carbonate. The amount of low temperature initiator can vary from about 0.03 to 1.0%, preferably 0.08 to 0.25%, by weight based on total weight of the monomers. The high temperature initiator can be employed in amounts varying from about 0.01 to 0.25%, preferably 0.05 to 0.15%, by weight based on total weight of the monomers.

The weight ratio of water to total monomer used in the process of the invention is not critical. In general, the ratio will vary from about 1:1 to 4:1. A water-soluble salt may be added to the water before polymerization is initiated to decrease the solubility of the acrylic acid monomer in the water. Any water-soluble salt is suitable for this purpose, but non-corrosive salts such as sodium sulfate are particularly preferred. Other solvents besides water may be present in the polymerization mixture, most of the monomer remains undissolved in the aqueous phase.

The aqueous heterogeneous mixture comprising water, the mono-vinyl aromatic monomer, the acrylic acid monomer, and the free-radical initiator is heated with stirring at a temperature of between about 60°C and 100°C to initiate polymerization of the monomers. It may be desirable to initiate polymerization with only a portion of one monomer present and then add the remainder of that monomer continuously to the reaction mixture. Such variations in combining the monomers are considered to be within the scope of this invention. Temperatures between about 75°C and 85°C are generally preferred. During this step of the process, the two monomers will constitute a substantially continuous organic phase present in admixture with an aqueous phase. Some of the acrylic acid monomer, however, may be dissolved in the aqueous phase. As polymerization proceeds, the copolymer formed will be largely dissolved in the organic phase.

Monomer conversion and viscosity are monitored until from about 10 to 75% of each of the monomers has reacted and the organic phase has begun to thicken noticeably due to polymer formation. At this point, a water-soluble polymer in an amount effective to convert the substantially continuous organic phase into a plurality of large droplets is introduced into the mixture. The large liquid droplets are comprised of the copolymer and unreacted monomers. The water-soluble polymer is most preferably added when from about 20 to 40% monomer conversion has occurred. Any water-soluble polymer suitable for such a purpose may be used. Polyvinyl alcohol is the preferred water-soluble polymer, but other materials such as partially saponified polyvinyl acetate or a polycarboxylic acid (polyacrylic acid, for example) may also be employed. Typically from about 0.02 to 0.1% polyvinyl alcohol based on the total weight of water and monomers will be sufficient. The amount of water-soluble polymer required to achieve the desired formation of large liquid droplets will vary depending on the particular water-soluble polymer used, styrene/methacrylic acid ratio, temperature, agitation rate, and water/monomer ratio. In any case, this amount is generally much lower than the amounts of water-soluble polymers commonly used as suspending agents in conventional suspension polymerization processes.

Copolymerization of the remaining unreacted monomers is then continued until substantially all of the monomer has reacted. When polymerization is complete, the large liquid droplets will be converted to large solid beads of copolymer. Completion of polymerization may be carried out at temperatures comparable to or slightly higher than those used during the initial part of the polymerization. More preferably, though, the reaction temperature is increased to over 100°C in order that all of the residual monomer is reacted more quickly. It is preferred that this final temperature not exceed the glass transition temperature of the copolymer, however, so that the beads do not soften and agglomerate.

The slurry of large solid beads in water obtained by the process of this invention may then be treated to separate the beads from the water. Methods such as filtration or centrifugation are suitable for this purpose. The separated beads may be washed with water or other suitable solvent to remove residual impurities, particularly any water-soluble polymer which may be clinging to the surface of the polymer beads. The separated beads can then be dried by any conventional method to remove water and other volatile residues.

In a preferred embodiment, a rubbery polymer is combined with the monomers to be copolymerized in order to produce a rubber-modified copolymer. The rubber modifier greatly improves the impact strength of the copolymer, thus reducing the brittleness of the product. The rubbery polymer preferably has a glass transition temperature below 0°C (more preferably, below -30°C) and contains ethylenically unsaturated functional groups which provide sites for grafting onto the styrene/acrylic acid monomer copolymer. It is desirable to combine the rubbery polymer with the comonomers in the first step of the process before polymerization is initiated.

Exemplary rubber polymers for use in preparing impact-modified copolymers include polybutadiene, polyisoprene, styrene-butadiene copolymers (block or random), butadiene-acrylonitrile copolymer, polychloroprene, ethylene-propylene copolymer, ethylene-propylene-diene (EPDM) terpolymers, polypentenamers, ethylene-vinyl acetate copolymers, and ethylene-alkyl acrylate copolymers. Other similar impact modifiers known to those skilled in the art are also suitable. The use of polybutadiene or styrene-butadiene block copolymers is generally preferred, particularly polybutadiene having a high (>35%) cis-1,4-polybutadiene content.

The suitable amount of the rubbery polymer which may be used is from about 1 to 70 weight percent, preferably 5 to 40 weight percent, of the total weight of copolymer.

The large solid beads of copolymer produced in accordance with the process of this invention can be molded into useful articles by any suitable conventional molding method, including injection molding, blow molding, and extrusion molding. The copolymer beads may be blended with other thermoplastic or elastomeric resins to yield polymer blends and alloys. It may be advantageous to incorporate additives such as lubricants, dyes, plasticizers, and stabilizers into the copolymer beads.

The invention is further illustrated but not limited by the following examples. The polyvinyl alcohol used in the examples was VINOL®540, sold commercially by Air Products.

EXAMPLE 1

This example illustrates the high yield, large bead size, and near quantitative acrylic acid monomer incorporation obtained by the process of this invention.

A 4 liter resin kettle equipped with a condenser, a mechanical stirrer, nitrogen inlet, and thermometer was charged with 1.6 L water, 930g styrene, 70g methacrylic acid, 1.0g benzoyl peroxide, and 3.0g lauroyl peroxide. The mixture was stirred and heated at 80°C for 3 hours using a water bath. A solution of polyvinyl alcohol (40 ml of a 5 wt. % aqueous solution) was then added, transforming the substantially continuous organic phase into a plurality of large liquid droplets. The mixture was further heated at 80°C for 2 hours and 90°C for an additional 2 hours. The large round beads (ca. 3 to 5 mm in diameter) were collected by filtration, washed with water, and dried to yield 980g (98%) product. The glass transition temperature of the product was 121°C, as measured by differential scanning calorimetry. The methacrylic acid content was determined to be 7% (7% calc.) by titration in tetrahydrofuran solution.

EXAMPLE 2

This example demonstrates the use of a water-soluble salt in the suspension polymerization process of this invention.

A 4 liter resin kettle equipped as described in Example 1 was charged with 2.0 L water containing 2 wt. % sodium sulfate, 765g styrene, 135g methacrylic acid, 2.2g VAZO® 64 (AIBN, sold commercially by E.I. Dupont de Nemours and Co.), and 1.0g benzoyl peroxide. The mixture was stirred and heated at 80°C for 2.5 hours. A solution of polyvinyl alcohol (25 ml of a 5 wt. % solution) was then added. The substantially continuous organic phase was broken up into large droplets. The reaction mixture was maintained at 80°C for an additional 3.5 hours. The product was collected by filtration and washed with water to yield 860g (95%) of large white beads approximately 3 to 4 mm in diameter. The methacrylic acid content was determined to be 15.0 wt. % (15.0 wt. % calc.) by titration.

EXAMPLE 3

A 4 liter resin kettle equipped as described in Example 1 was charged with 1.6 L water, 850g styrene, 150g methacrylic acid, 1.0g benzoyl peroxide, and 3.0g lauroyl peroxide. The mixture was stirred to 600 rpm while heating under a nitrogen atmosphere at 80°C for 2.5 hours. A solution of polyvinyl alcohol (16 ml of a 5 wt. % aqueous solution) was then added; the viscous organic phase immediately was broken up into large droplets. The polymerization was continued for another 2.5 hours at 80°C and then for 2 hours at 90°C. The product was collected on a sieve, washed with water, and dried to yield 980g (98%) semi-transparent beads approximately 3 to 5 mm in diameter. The product had a methacrylic acid content of 15%, in agreement with the expected value of 15%. The glass transition temperature was 141°C by DSC.

EXAMPLE 4

A 4 liter resin kettle equipped as described in Example 1 was charged with 1.6 L water, 750g styrene, 250g methacrylic acid, 1.0g benzoyl peroxide, and 3.0g lauroyl peroxide. The mixture was stirred and heated for 2.3 hours at 80°C before adding polyvinyl alcohol (5 ml of a 5 wt. % aqueous solution). After reacting for another 3 hours at 80°C and 2 hours at 90°C, the product was collected and washed with water. The large round beads (approximately 3-5 mm in diameter) weighed 990g (99%) after drying. The methacrylic acid content of the product was 25%, in agreement with the expected value, while the glass transition temperature was 155°C by DSC.

### EXAMPLE 5

A 4 liter resin kettle equipped as described in Example 1 was charged with 2.0 L water, 850g styrene, 150g methacrylic acid, 1.g benzoyl peroxide, and 3.0g lauroyl peroxide. The mixture was heated at 80°C for 3 hours and then treated with 100g of a 25% aqueous solution of polyacrylic acid (90,000 MW) to convert the organic phase to large droplets. Polymerization was continued for an additional 2 hours at 80°C and then 1 hour at 90°C. The large and slightly irregularly shaped beads thus formed weighed 910g (91%) after drying.

### EXAMPLE 6

The use of a rubbery polymer to impact modify a styrene-methacrylic acid copolymer is shown in this example.

A 4 liter resin kettle equipped as described in Example 1 was charged with 723g styrene, 122g methacrylic acid, and 150g of a butadiene/styrene (60/40, random) rubber. The mixture was stirred to dissolve the rubber before adding 3.0g lauroyl peroxide, 1.0g benzoyl peroxide, and 2000 ml water. The mixture was stirred and heated 90 minutes at 80°C. Polyvinyl alcohol (15g of a 5% aqueous solution) was added to the resulting viscous mixture, causing the organic phase to disperse into large droplets. The polymerization was continued for another 3.5 hours at 80°C and 1 hour at 90°C. The mixture was cooled to room temperature and the product collected on a 100 mesh sieve to yield 930g (93%) of large semi-transparent beads about 3 mm in diameter. The beads were molded into specimens having a notched Izod (ASTM D-256) value of 2.61 ft-lb/in and a glass transition temperature of 149°C (DSC).

### COMPARATIVE EXAMPLE 7

This example illustrates the advantages of adding the water-soluble polymer (polyvinyl alcohol) after copolymerization has proceeded to a limited extent rather than before polymerization is initiated. A 4 liter resin kettle equipped as described in Example 1 was charged with 2.0 L water, 1.0g polyvinyl alcohol, and 20g tricalcium phosphate. To this mixture was added 850g styrene, 150g methacrylic acid, and 3.0g benzoyl peroxide. The mixture was stirred at 600 rpm while heating at 90°C for 5 hours. The product was then collected on a sieve, washed with water, washed with dilute acid, washed again with water and dried to yield 950g of small beads approximately 0.3 to 0.5 mm in diameter. The beads of copolymer obtained by this method were thus much smaller than those produced by the process of this invention. The glass transition temperature of the product was 121°C, as measured by differential scanning calorimetry. The methacrylic acid content was determined to be 14.0% (15% calc.) by titration in tetrahydrofuran solution.

### COMPARATIVE EXAMPLE 8

This example demonstrates the advantages of the process of this invention compared to a conventional suspension polymerization in which a relatively large amount of a water-soluble polymer (e.g., polyvinyl alcohol) and an insoluble inorganic dispersant are added to the mixture before polymerization is initiated. A 4 liter resin kettle was charged with 2.0 L water, 100 mL of a 10% aqueous solution of polyvinyl alcohol, 40g sodium sulfate, and 15g tricalcium phosphate. After adding 765g styrene, 135g methacrylic acid, 2.2g VAZO®64, and 1.0g benzoyl peroxide, the mixture was stirred under nitrogen at 85°C for 6 hours. The product was collected on a sieve (US #150), washed with dilute hydrochloric acid and water, and dried to yield 765g (85%) of a fine white powder.

### COMPARATIVE EXAMPLE 9

This example demonstrates the advantages of having water present during the initial stage of the copolymerization in accordance with the process of this invention. A 4 liter resin kettle equipped as described in Example 1 was charged with 360g styrene, 40g methacrylic acid, 0.5g benzoyl peroxide, and 1.0g azo-bis-isobutyronitrile. After stirring 1 hour at 80°C, the mixture became a thick syrup which clung to the kettle wall and stirrer. During this time, the temperature was difficult to control. After adding 1.6 L water, 8.0g tricalcium phosphate, and 10 mL of a 10% polyvinyl alcohol solution in water, the reaction mixture was heated for another 2 hours at 80°C and then 90°C for 2 hours. The product was collected, washed with water and dilute hydrochloric acid, and dried to yield large beads about 5 mm in diameter. The yield was only 300g (75%); a substantial amount of product was lost on the kettle wall and stirrer.

In all of Examples 1 to 6 above, the polyvinyl alcohol was added to the polymerization kettle at a time when between 10 and 75% of each of the monomers had polymerized.

## Claims

1. A process for producing large solid beads of a copolymer comprising the steps of:

(a) forming an aqueous heterogeneous mixture comprising water and a monomer mixture of monovinyl aromatic monomer, acrylic acid monomer and optionally a minor amount, based on total weight of comonomer, of at least one other copolymerizable monomer, the concentrations of the monovinyl aromatic monomer and acrylic acid monomer being respectively 60 to 90 weight per cent and 1 to 40 weight per cent based on the total amount of monovinyl aromatic monomer and acrylic acid monomer present;

(b) reacting the aqueous heterogeneous mixture in the presence of a free radical polymerization initiator to form a copolymer until from about 10 to 75 weight percent of each of the monomers is polymerized;

(c) adding a water-soluble polymer in an amount effective to form a plurality of large liquid droplets comprised of the copolymer and the unpolymerized monomers; and

(d) completing the polymerization of the monomers whereby the large liquid droplets are converted into large solid beads.

2. The process of claim 1 wherein from about 20 to 40 weight percent of each of the monomers is polymerized in step (b).

3. The process of claim 1 or claim 2 comprising the additional step after step (d) of separating the large solid beads from the water.

4. The process of claim 1 or claim 2 comprising the additional steps after step (d) of first separating the large solid beads from the water and then washing the separated large solid beads with water.

5. The process of claim 4 comprising the additional step of drying the washed large solid beads.

6. The process of any one of claims 1 to 5 wherein the aqueous heterogeneous mixture additionally includes a water-soluble salt.

7. The process of claim 6 wherein the water-soluble salt is soldium sulfate.

8. The process of any one of claims 1 to 7 wherein the monovinyl aromatic monomer is styrene.

9. The process of any one of claims 1 to 8 wherein the acrylic acid monomer is selected from methacrylic acid and acrylic acid.

10. The process of any one of claims 1 to 9 wherein the copolymer is a copolymer of styrene and methacrylic acid.

11. The process of any one of claims 1 to 10 wherein the weight ratio of water:total monomer in the aqueous heterogeneous mixture is from about 1:1 to 4:1.

12. The process of any one of claims 1 to 11 wherein the free radical polymerization initiator is selected from organic peroxides, peresters, perketals, percarbonates, azo compounds, and mixtures thereof.

13. The process of any one of claims 1 to 12 wherein the water-soluble polymer is selected from polyvinyl alcohol, polyvinyl acetate which has been partially saponified, and polycarboxylic acids.

14. The process of any one of claims 1 to 13 wherein the large solid beads have an average diameter of from about 1 to 10 mm.

15. The process of any one of claims 1 to 14 wherein the aqueous heterogeneous mixture additionally includes from about 1 to 70 weight percent based on total copolymer of a rubbery polymer.

16. A process as claimed in any one of claims 1 to 14 wherein the aqueous heterogeneous mixture additionally includes from about 5 to 40 weight percent based on total copolymer of a rubbery copolymer.

17. The process of claim 15 or claim 16 wherein the rubbery polymer has an ethylenically unsaturated functional group capable of grafting onto the copolymer.

18. The process of claim 15, claim 16 or claim 17 wherein the rubbery polymer is selected from the group consisting of styrene-butadiene copolymers and polybutadiene.

19. A process for producing a molded article comprising molding the large solid beads of a copolymer prepared in accordance with the process of any one of claims 1 to 18.